# EUROPÄISCHE PATENTSCHRIFT

(11) **EP 2 888 538 B1**
(45) Veröffentlichungstag und Bekanntmachung des Hinweises auf die Patenterteilung: **13.12.2023**
(21) Anmeldenummer: 13780048.8
(22) Anmeldetag: 20.08.2013
(51) Int. Cl.: F24S 25/61, F24S 25/60, F24S 25/00

(54) **VORRICHTUNG FÜR DIE BEFESTIGUNG VON GEGENSTÄNDEN**
DEVICE FOR FASTENING OBJECTS
DISPOSITIF POUR LA FIXATION D'OBJETS

(30) Priorität: 24.08.2012 AT 9202012
(43) Veröffentlichungstag der Anmeldung: 01.07.2015
(73) Patentinhaber: Traxler, Manfred, 4614 Marchtrenk (AT)
(72) Erfinder: Traxler, Manfred, 4614 Marchtrenk (AT)
(74) Vertreter: Burgstaller, Peter
(86) Internationale Anmeldenummer: PCT/AT2013/050164
(87) Internationale Veröffentlichungsnummer: WO 2014/028957

(56) Entgegenhaltungen:
- DE-A1- 1 506 502
- DE-A1-102006 022 870
- DE-U1-202007 005 995
- US-A1- 2011 135 882

## Beschreibung

Die Erfindung betrifft eine Vorrichtung für die Befestigung von Gegenständen an einer Außenoberfläche eines Gebäudes oder Gegenstandes.

Ein typischer und erfindungsgemäßer Anwendungsfall für die Vorrichtung betrifft die Befestigung von Solarmodulen, Antennen, Sekuranten, Klimageräten oder Absturzsicherungen an Gebäuden (Flachdächer, Attika) oder Gegenständen.

Die US 2011135882 A1 zeigt ein System, bei welchem ein Anschlussteil auf einer Dichtfolie fixiert wird, wobei das Anschlussteil Bestandteil einer Montageplatte ist, oder mit der Montageplatte auf der Dichtfolie befestigt werden kann. Da die Montageplatte auf die Dichtfolie aufgeklebt wird, diese somit intakt ist, muss das Montagesystem bestehend aus Anschlussteil und Montageplatte nicht dicht sein.

Die DE 10 2010 036 305 A1 beschreibt die Befestigung einer Tragekonstruktion auf einem Flachdach, wobei die äußerste Schicht des Flachdaches eine Dichtungsbahn ist, welche auf einer nicht tragfähigen Dämmschicht abgestützt ist. Die Tragekonstruktion weist einen über die Dichtungsbahn hinausragenden Anschlussflansch und einen an einer tieferliegenden Unterkonstruktion abgestützter Trageteil auf. Zwischen diesen beiden Teilen ist die Dichtungsbahn eingeklemmt. Die Klemmkraft ist gleich jener Kraft, mit der der Anschlussflansch am Trageteil gehalten wird.

Durch die DE 10 2009 043 808 A1 wird vorgeschlagen, ein U-Profil, an welchem über eine Dachfläche vorstehende Teile befestigt werden können, mit seiner Grundfläche auf der Dachfläche aufzulegen und mittels Schrauben, welche durch die Mitte der Grundfläche verlaufen, mit dem Gebäude zu verbinden. Der durch das U-Profil umschlossene kanalartige Raum kann durch ein weiteres Profil, welches auf die Stege des U-Profils aufgeklemmt wird, nach oben hin abgedichtet werden. Zwischen Dachfläche und Grundfläche des Profils sind Dichtstreifen angeordnet. Die Kraft, mit der das U-Profil an das Dach gezogen wird, ist zwangsweise gleich der Kraft, mit der diese Dichtstreifen belastet werden.

Die DE 10 2010 016 677 A1 zeigt eine Befestigungsvorrichtung für die Befestigung von Solarmodulen an einem Flachdach. Die Vorrichtung weist eine tellerförmige Grundplatte auf, die auf der Dichtfolie der Dachfläche aufliegt und über Schrauben mit der Tragekonstruktion des Daches verbunden ist. Von der Grundplatte stehen Anschlussteile für Aufbauten über dem Dach empor. Beispielsweise können diese Anschlussteile Gewindebolzen sein. Es wird auch vorgeschlagen, die Grundplatte durch eine weitere Dichtfolie zu überdecken, wobei diese weitere Dichtfolie mit der Dichtfolie der Dachfläche durch eine ringförmig um die Grundplatte herum verlaufende Naht verschweißt oder verklebt ist und oberhalb der Grundplatte Öffnungen aufweist, durch welche die Anschlussteile für Aufbauten hindurchragen.

Die JP 2011174360 A zeigt eine Vorrichtung zur Befestigung eines Solarpanels auf einem Dach. Die Vorrichtung weist einen Tragteil und einen Abdeckungsteil auf, wobei der Tragteil die statisch tragende Funktion und der Abdeckteil die Dichtfunktion innehat. Der Abdeckteil ist ein formstabiler Körper, der mit einer Dichtung ausgestattet ist und über eine Schraube und einen Dichtring am Tragteil verankert ist. Der Anschlussbolzen ragt vom Tragteil aus durch eine Öffnung im Abdeckteil hindurch. Nachteilig ist, dass nur ein zentraler Anschlussbolzen vorhanden ist, über welchen der Abdeckungsteil gegen die Oberfläche des Daches gedrückt wird. Daher ist es nicht möglich, den Anpressdruck an den Randbereichen des Abdeckteils zu justieren bzw. unterschiedlich einzustellen, wie es beispielsweise nötig ist, wenn der Anschlussbolzen und die Dachoberfläche keinen Winkel von 90° einschließen. Auch sind die Möglichkeiten zum Anbringen eines Gegenstandes an dem nur einen Anschlussbolzen limitiert und eine Winkelkorrektur ist nicht möglich. DE 20 2007 005995 beschreibt den Oberbegriffs des Anspruchs 1.

Die Befestigungsvorrichtungen der genannten Schriften haben zudem den Nachteil, dass ihre Dichtfunktion nicht mit einfachen Mitteln geprüft werden kann. Die DE 4416884 A1 offenbart ein Verbindungsteil, welches auf die Rückseite eines Solarpanels aufgeklebt wird. Die Vorrichtung weist einen Hohlraum zwischen dem Verbindungsteil und der Oberfläche des Solarpanels auf, welcher durch eine Entlüftungsbohrung mit der Umgebung verbunden ist. Die Entlüftungsbohrung hat den Sinn, dass bei Einbringen von Klebstoff durch eine zentrale Bohrung eine Verbindung nach außen offen bleibt, über die Luft aus dem Hohlraum, welcher mit Klebstoff gefüllt werden soll, entweichen kann und dass überschüssiger Klebstoff entweichen kann. Ist die Vorrichtung einmal montiert, besteht kein Hohlraum mehr zwischen Halterung und Untergrund und auch die Entlüftungsbohrung ist durch Klebstoff verschlossen. Nachteilig ist, dass die Bohrung in den Hohlraum nach Befestigung nicht für eine Dichtheitsprüfung verwendet werden kann.

Von diesem Stand der Technik ausgehend, hat sich der Erfinder die Aufgabe gestellt, eine Vorrichtung für die Befestigung von Gegenständen an einer Außenoberfläche eines Gebäudes bereitzustellen. Gegenüber den besprochenen Vorrichtungen soll die zu schaffende Vorrichtung dahingehend vorteilhaft sein, dass die Dichtwirkung zwischen der Vorrichtung und der Gebäudeaußenfläche jahrelang verlässlich aufrecht bleibt, einfach herbeizuführen und justierbar ist und dass sie eine einfache, ausrichtbare Befestigung von Gegenständen erlaubt.

Zum Lösen der Aufgabe wird eine Vorrichtung nach Anspruch 1 und ein Verfahren nach Anspruch 14 vorgeschlagen.

Es wird von einer Bauweise entsprechend der DE 10 2010 016 677 A1 ausgegangen, wonach die Vorrichtung einen Trageteil und einen Abdeckungsteil aufweist, wobei der Trageteil die statisch tragende Funktion für die zu befestigenden Gegenstände innehat und der Abdeckungsteil die Dichtfunktion gegenüber der Gebäudeaußenoberfläche übernimmt und wobei Anschlussteile für die zu befestigenden Gegenstände vom Trageteil aus durch Öffnungen im Abdeckungsteil hindurchragen. Als grundlegende erfindungsgemäße Verbesserung dazu wird vorgeschlagen, den Abdeckungsteil als formstabilen Körper auszubilden und die Relativposition des Abdeckungsteils gegenüber dem Trageteil in der zur Gebäudeoberfläche normalen Richtung einstellbar auszuführen.

Durch das erfindungsgemäße Merkmal kann die Anpresskraft zwischen Abdeckungsteil und Gebäudeaußenfläche unabhängig von der Haltewirkung der Vorrichtung in der für die erforderliche Dichtwirkung optimalen Weise eingestellt werden. Damit ist wesentlich besser erreichbar, dass die Dichtfläche zwischen Abdeckungsteil und Gebäudeaußenfläche über Jahre trotz widriger Witterungs- und Temperaturschwankungen aufrecht bleibt.

Mit dem Begriff "formstabiler Körper" ist ein Körper gemeint, welcher nicht wie ein Seil oder eine Folie ganz oder fast ganz ohne elastische Rückstellkraft verformbar ist, sondern stattdessen verformenden Kräften eine nennenswerte Widerstandskraft entgegensetzt.

Die Nachteile der Befestigungsvorrichtung der JP 2011174360 A werden dadurch vermieden, dass anstelle des einen zentralen Befestigungsbolzens zumindest zwei vorzugsweise drei Befestigungsbolzen durch den Abdeckungsteil ragen. Zusätzlich vorteilhaft ist der Umstand, dass die Gewichtskraft des Gegenstandes von zwei oder mehr Gewindebolzen aufgenommen wird und auch die davon unabhängige Anpresskraft auf den Abdeckteil an zwei oder mehr Stellen aufgebracht wird. Daher ergeben sich als Zusatznutzen geringere Anforderungen an die Dimensionierung der Bolzen und der Materialstärke des Abdeckteils. Außerdem kann die Anpresskraft an den Randbereichen des Abdeckteils auf die Dichtung über die zwei oder mehr Anschlussbolzen unterschiedlich eingestellt werden und eine Winkelkorrektur des Abdeckteils zu den Befestigungsbolzen vorgenommen werden. Dadurch wird erreicht, dass die Dichtwirkung, auch bei unebenen Dachflächen oder einer etwas schrägen Montage der Vorrichtung (der Winkel zwischen Befestigungsbolzen und Dachoberfläche beträgt nicht 90°), in einfacher Weise hergestellt werden kann.

Ein weiterer Aspekt der Erfindung besteht in der Schaffung einer einfachen Möglichkeit zur Dichtheitsprüfung der Vorrichtung. Dabei führt ein Ventil (also eine wahlweise verschließbare Öffnung) durch eine Bohrung im Abdeckungsteil in den Raum zwischen Abdeckungsteil und Trageteil, bzw. Gebäudeoberfläche. Damit kann nach der Montage der Vorrichtung mittels einer Pumpe in diesem Raum ein Druckunterschied gegenüber der Umgebung erzeugt und gemessen werden, wie rasch sich dieser Druckunterschied nach dem Abstellen der Pumpe abbaut. Somit kann die Dichtheit der Vorrichtung gemessen werden.

Die Erfindung wird an Hand einer Zeichnung veranschaulicht.

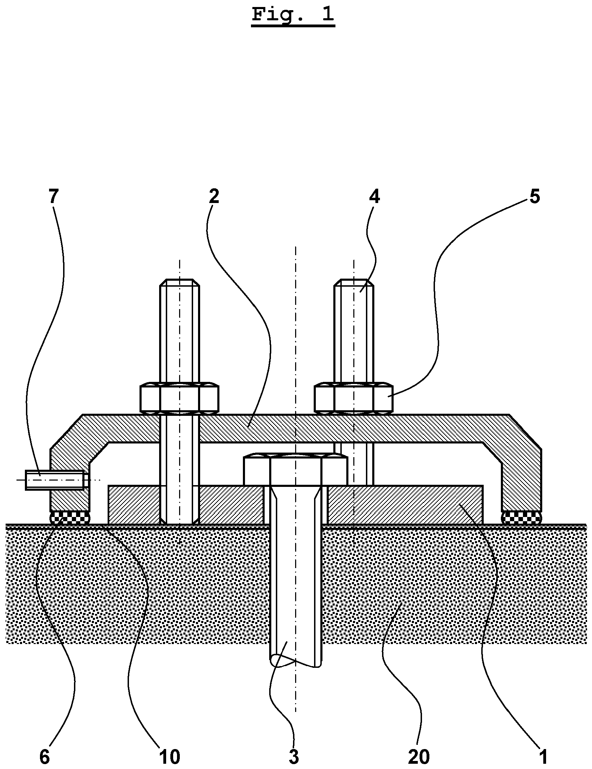

Fig. 1: zeigt eine beispielhafte, an einer Dachfläche angeordnete erfindungsgemäße Vorrichtung in seitlicher Schnittansicht.

Gemäß Fig. 1 ist die beispielhafte erfindungsgemäße Vorrichtung auf der Außenseite einer zum Dach gehörenden Dichtfolie 10 angeordnet und mit der unter der Dichtfolie 10 liegenden Dachunterkonstruktion 20 statisch tragend verbunden.

Die dargestellte Vorrichtung weist einen Trageteil 1 auf, welcher eine flache, kreisscheibenförmige Platte ist. Dieser Trageteil ist durch eine Schraube 3, welche durch eine Bohrung in seiner Mitte und durch eine Bohrung in der Dichtfolie 10 hindurch verläuft und mit der Dachunterkonstruktion 20 in Gewindeeingriff ist, an die Dachunterkonstruktion 20 gedrückt und an dieser gehalten.

Am Trageteil 10 sind Anschlussteile, welche im dargestellten Beispiel durch Gewindebolzen 4 gebildet sind, verankert. Diese Anschlussteile dienen für die Befestigung des mittels der Vorrichtung am Dach zu verankernden Gegenstandes wie beispielsweise einem Solarmodul.

In der dargestellten vorteilhaften Ausführung ragen mindestens zwei vorzugsweise drei Gewindebolzen 4 normal zu jener Gebäudeaußenfläche, an welcher die Vorrichtung anzubringen ist, von der Gebäudeaußenfläche weg. Diese Gewindebolzen 4 sind dabei nicht in einer Reihe nebeneinander angeordnet, sondern im vorteilhaften Fall, wonach drei Gewindebolzen 4 verwendet werden, werden diese an den Eckpunkten eines (gedachten) Dreiecks, bevorzugt eines gleichseitigen Dreiecks, dessen Schwerpunkt an der Mittelachse des Trageteils 1 liegt, angeordnet. Die drei Gewindebolzen 4 bilden in ihrer vorteilhaften Ausführung die drei Beine eines Dreibeins, an welchem ein Gegenstand zu befestigen ist, wobei die Winkelausrichtung des Gegenstandes dadurch einstellbar ist, dass die Längsbereiche an denen er genau an den einzelnen Gewindebolzen befestigt ist, von Gewindebolzen 4 zu Gewindebolzen 4 unterschiedlich einstellbar sind.

Gegenüber dem Außenraum ist der Trageteil 1 durch einen schalenförmigen Abdeckungsteil 2 abgedeckt, welcher über den Trageteil gestülpt ist und mit der freien Stirnfläche seiner Mantelfläche unter Zwischenlage einer Dichtung 6 an der Dichtfolie 10 des Daches anliegt.

Die Gewindebolzen 4 verlaufen durch Bohrungen in der Grundfläche des schalenförmigen Abdeckungsteils 2 hindurch. Der Abdeckungsteil 2 wird an die Dichtfolie 10 des Daches, und damit auch in Richtung auf den Trageteil 1 durch Muttern 5 gedrückt, welche an der Außenseite des Abdeckungsteils auf die Gewindebolzen 4 geschraubt sind und am Abdeckungsteil 2 anliegen. Je nachdem wie weit diese Muttern 5 geschraubt werden, wird der Abdeckungsteil 2 mehr oder minder nahe an die Dichtfolie 10 des Daches herangerückt, womit die Dichtung 6 mehr oder minder stark gepresst wird. Die Kraft mit der auf die Dichtflächen zwischen Dichtfolie 10 und Abdeckungsteil 2 gedrückt wird, ist damit stufenlos und weitgehend unabhängig davon einstellbar, welche Last die Vorrichtung trägt.

Die Dichtung 6 besteht vorzugsweise aus einem gummielastischen Material und kann beispielsweise ein O-Ring sein.

Damit keine Feuchtigkeit durch jene Bohrungen, an denen die Gewindebolzen 4 durch den Abdeckungsteil 2 hindurch verlaufen in den Raum zwischen Abdeckungsteil 2 und Trageteil 1 eindringt, sollten die Muttern 5 an den Gewindebolzen 4 streng, also unter Presspassung sitzen und es muss auch am Flächenbereich zwischen Muttern 5 und Abdeckungsteil 2 Dichtheit herrschen. Das kann erreicht werden, indem zwischen Muttern 5 und Abdeckungsteil 2 ein Dichtring (nicht dargestellt) eingelegt wird oder indem die Muttern 5 selbst, welche ja nicht allzu viel tragen müssen, aus einem relativ weichelastischem Material, wie typischerweise einem thermoplastischen Kunststoff bestehen, der sich beim Andrücken an den Abdeckungsteil 2 soweit verformt, dass Dichtheit hergestellt wird.

In einer optionalen Weiterentwicklung der erfindungsgemäßen Vorrichtung führt ein Ventil 7 (also eine wahlweise verschließbare Öffnung) durch eine Bohrung im Abdeckungsteil 2 in den Raum zwischen Abdeckungsteil 2 und Trageteil 1. Damit kann nach der Montage der Vorrichtung mittels einer Pumpe in diesem Raum ein Druckunterschied gegenüber der Umgebung erzeugt und gemessen werden, wie rasch sich dieser Druckunterschied nach dem Abstellen der Pumpe abbaut. Somit kann gemessen werden, ob der Raum zwischen Abdeckungsteil 2 und Trageteil 1 gegenüber der Umgebung gut abgedichtet ist oder nicht.

## Patentansprüche

1. Vorrichtung für die Befestigung von Gegenständen an einer Außenoberfläche eines Gebäudes oder Gegenstandes, wobei die Vorrichtung einen Trageteil (1) und einen Abdeckungsteil (2) aufweist, wobei der Trageteil (1) die statisch tragende Funktion für den zu befestigenden Gegenstand innehat und der Abdeckungsteil (2) die Dichtfunktion gegenüber der Gebäude- oder Gegenstandsaußenoberfläche und dazu an der Außenseite der Außenoberfläche des Gebäudes oder Gegenstandes angeordnet ist, wobei der Abdeckungsteil (2) ein formstabiler Körper ist und die Relativposition des Abdeckungsteils (2) gegenüber dem Trageteil (1) in der zur Gebäude- oder Gegenstandsoberfläche normalen Richtung einstellbar ist,
**dadurch gekennzeichnet, dass**
mindestens zwei Anschlussteile für den zu befestigenden Gegenstand vom Trageteil (1) aus durch Öffnungen im Abdeckungsteil (2) hindurchragen,
wobei der Abdeckungsteil (2) schalenförmig ist und die freie Stirnfläche seiner Mantelfläche der Gebäudeaußenfläche zugewandt angeordnet ist.

2. Vorrichtung nach Anspruch 1, **dadurch gekennzeichnet, dass** der Abdeckteil (2) mittels Schrauben am Trageteil (1) verankert ist.

3. Vorrichtung nach einem der Ansprüche 1 bis 2, **dadurch gekennzeichnet, dass** zwischen Abdeckungsteil (2) und Gebäude- oder Gegenstandsaußenfläche eine Dichtung (6) angebracht ist.

4. Vorrichtung nach Anspruch 3, **dadurch gekennzeichnet, dass** die Dichtung (6) aus einem gummielastischen Material besteht.

5. Vorrichtung nach einem der Ansprüche 1 bis 4, **dadurch gekennzeichnet, dass** die Anschlussteile drei Gewindebolzen (4) sind, welche normal zur Gebäudeaußenfläche ausgerichtet sind und dass die direkten Verbindungslinien zwischen den einzelnen Achsen dieser Gewindebolzen (4) in der Projektion auf eine zu den Gewindebolzen (4) normal liegende Ebene gemeinsam ein Dreieck darstellen.

6. Vorrichtung nach Anspruch 5, **dadurch gekennzeichnet, dass** das Dreieck gleichseitig ist.

7. Vorrichtung nach einem der Ansprüche 1 bis 4, **dadurch gekennzeichnet, dass** die Anschlussteile zumindest drei Gewindebolzen (4) sind, welche normal zur Gebäude- oder Gegenstandsaußenfläche ausgerichtet sind.

8. Vorrichtung nach Anspruch 2 und Anspruch 5 oder Anspruch 6 oder Anspruch 7, **dadurch gekennzeichnet, dass** eine Mutter (5) mit einem Gewindebolzen (4) in Eingriff ist und von der dem Trageteil (1) abgewandten Seite her am Abdeckungsteil (2) anliegt.

9. Vorrichtung nach einem der Ansprüche 1 bis 7, **dadurch gekennzeichnet, dass** die durch die Grundfläche des Abdeckungsteils (2) verlaufenden Anschlussteile Gewindebolzen (4) sind, auf welchen Muttern (4) aufgeschraubt sind, welche an der Außenseite des Abdeckungsteils (2) auf die Gewindebolzen (4) aufgeschraubt sind und am Abdeckungsteil (2) anliegen und den Abdeckungsteil (2) an eine Dichtfolie (10) des Daches und damit auch in Richtung auf den Trageteil (1) drücken.

10. Vorrichtung nach einem der Ansprüche 1 bis 9, **dadurch gekennzeichnet, dass** in einer Bohrung, welche den zwischen dem Trageteil (1) und dem Abdeckungsteil (2) eingeschlossenen Raum mit der Umgebung verbindet, ein Ventil (7) angeordnet ist.

11. Vorrichtung nach einem der Ansprüche 1 bis 10, **dadurch gekennzeichnet, dass** ein Ventil, in Form einer wahlweise verschließbaren Öffnung, durch eine Bohrung im Abdeckungsteil (2) in den Raum zwischen Abdeckungsteil (2) und Trageteil (1) bzw. Gebäudeoberfläche führt.

12. Vorrichtung nach einem der Ansprüche 1 bis 11, **dadurch gekennzeichnet, dass** die Vorrichtung auf der Außenseite einer zu einem Dach gehörenden Dichtfolie (10) angeordnet ist und mit der unter der Dichtfolie (10) liegenden Dachunterkonstruktion (20) statisch tragend verbunden ist.

13. Vorrichtung nach den Ansprüchen 9 und 12, **dadurch gekennzeichnet, dass** der Abdeckungsteil (2) an die Dichtfolie (10) des Daches und damit auch in Richtung auf den Trageteil (1) durch Muttern (5) gedrückt ist, welche an der Außenseite des Abdeckungsteils (2) auf die Gewindebolzen (4) geschraubt sind und am Abdeckungsteil (2) anliegen.

14. Verfahren zur Dichtheitsprüfung einer Vorrichtung für die Befestigung von Gegenständen an einer Außenoberfläche eines Gebäudes oder Gegenstandes, nach einem der Ansprüche 1 bis 13, wobei die Vorrichtung einen Trageteil (1) und einen Abdeckungsteil (2) aufweist, wobei der Trageteil (1) die statisch tragende Funktion für den zu befestigenden Gegenstand innehat und der Abdeckungsteil (2) die Dichtfunktion gegenüber der Gebäude- oder Gegenstandsaußenoberfläche und dazu an der Außenseite der Außenoberfläche des Gebäudes oder Gegenstandes angeordnet ist und wobei ein oder mehrere Anschlussteile für den zu befestigenden Gegenstand vom Trageteil (1) aus durch Öffnungen im Abdeckungsteil (2) hindurchragen, wobei der Abdeckungsteil (2) ein formstabiler Körper ist und die Relativposition des Abdeckungsteils (2) gegenüber dem Trageteil (1) in der zur Gebäude- oder Gegenstandsoberfläche normalen Richtung einstellbar ist, **dadurch gekennzeichnet, dass**
ein Ventil, also eine wahlweise verschließbare Öffnung, durch eine Bohrung im Abdeckungsteil (2) in den Raum zwischen Abdeckungsteil (2) und Trageteil (1) führt, wobei nach der Montage der Vorrichtung in diesem Raum ein Druckunterschied gegenüber der Umgebung erzeugt wird und gemessen wird, ob der Raum zwischen Abdeckungsteil (2) und Trageteil (1) gegenüber der Umgebung abgedichtet ist.

## Claims

1. A device for fastening objects to an outer surface of a building or object, wherein the device has a carrying part (1) and a covering part (2), wherein the carrying part (1) has the statically supporting function for the object to be fastened and the covering part (2) the sealing function in relation to the building outer surface or object outer surface, and, for this purpose, is arranged on the outer side of the outer surface of the building or object, wherein the covering part (2) is a dimensionally stable body, and the relative position of the covering part (2) in relation to the carrying part (1) is adjustable in the direction normal to the building surface or object surface,
**characterized in that**
at least two connecting parts for the object to be fastened protrude from the carrying part (1) through openings in the covering part (2),
wherein the covering part (2) is cup-shaped and the open end face of its lateral surface is arranged facing the outer surface of the building.

2. The device as claimed in claim 1, **characterized in that** the covering part (2) is anchored on the carrying part (1) by means of screws.

3. The device as claimed in one of claims 1 to 2, **characterized in that** a seal (6) is fitted between covering part (2) and building outer surface or object outer surface.

4. The device as claimed in claim 3, **characterized in that** the seal (6) is composed of a rubber-elastic material.

5. The device as claimed in one of claims 1 to 4, **characterized in that** the connecting parts are three threaded bolts (4) which are oriented normally to the building outer surface, and **in that** the direct connection lines between the individual axes of said threaded bolts (4) together constitute a triangle in the projection onto a plane lying normally to the threaded bolts (4).

6. The device as claimed in claim 5, **characterized in that** the triangle is equilateral.

7. The device as claimed in one of claims 1 to 4, **characterized in that** the connecting parts are at least three threaded bolts (4) which are oriented normally to the building outer surface or object outer surface.

8. The device as claimed in claim 2 and claim 5 or claim 6 or claim 7, **characterized in that** a nut (5) is in engagement with a threaded bolt (4) and bears against the covering part (2) from the side facing away from the carrying part (1).

9. The device according to one of claims 1 to 7, **characterized in that** the connecting parts running through the base of the covering part (2) are threaded bolts (4) onto which nuts (4) are screwed, which are screwed onto the threaded bolts (4) from the outside of the covering part (2) and rest on the covering part (2) and press the covering part (2) against a sealing film (10) of the roof and thus also press the covering part (2) in the direction of the carrying part (1).

10. The device as claimed in one of claims 1 to 9, **characterized in that** a valve (7) is arranged in a bore which connects the space enclosed between the carrying part (1) and the covering part (2) to the surroundings.

11. The device according to one of claims 1 to 10, **characterized in that** a valve, in the form of a selectively closable opening, leads through a hole in the covering part (2) into the space that is located between the covering part (2) and the carrying part (1) or the building surface.

12. The device according to one of claims 1 to 11, **characterized in that** the device is arranged on the outside of a sealing film (10) belonging to a roof and is statically connected to the roof substructure (20) lying under the sealing film (10).

13. Device according to claims 9 and 12, **characterized in that** the covering part (2) is pressed against the sealing film (10) of the roof and thus also in the direction of the carrying part (1) by nuts (5) which are located on the outside of the covering part (2) and are screwed onto the threaded bolts (4) and rest on the covering part (2).

14. A method for testing the tightness of a device for fastening objects to an outer surface of a building or object according to of claims 1 to 13, wherein the device has a carrying part (1) and a covering part (2), wherein the carrying part (1) has the statically supporting function for the object to be fastened and the covering part (2) the sealing function in relation to the building outer surface or object outer surface, and, for this purpose, is arranged on the outer side of the outer surface of the building or object, and wherein one or more connecting parts for the object to be fastened protrude from the carrying part (1) through openings in the covering part (2), wherein the covering part (2) is a dimensionally stable body, and the relative position of the covering part (2) in relation to the carrying part (1) is adjustable in the direction normal to the building surface or object surface,
**characterized in that**
a valve (7), in the form of a selectively closable opening, leads through a hole in the covering part (2) into a space that is located between the covering part (2) and the carrying part (1), whereby after the device has been installed, a pressure difference compared to the environment is generated in this space and it is measured whether the space between the covering part (2) and the support part (1) is sealed from the environment.

## Revendications

1. Dispositif pour la fixation d'objets sur une surface extérieure d'un bâtiment ou d'un objet, le dispositif comprenant une partie de support (1) et une partie de recouvrement (2), la partie de support (1) ayant une fonction porteuse pour l'objet à fixer et la partie de recouvrement (2) ayant une fonction d'étanchéité par rapport à la surface extérieure du bâtiment ou de l'objet et étant disposée à cet effet sur le côté extérieur de la surface extérieure du bâtiment ou de l'objet, la partie de recouvrement (2) étant un corps indéformable et la position relative de la partie de recouvrement (2) par rapport à la partie de support (1) étant ajustable dans la direction perpendiculaire à la surface du bâtiment ou de l'objet,
**caractérisé en ce qu'**
au moins deux éléments de jonction pour l'objet à fixer dépassent de la partie de support (1) à travers des ouvertures dans la partie de recouvrement (2),
la partie de recouvrement (2) étant en forme de coupe et la surface frontale exposée de sa surface d'enveloppe étant tournée vers la surface extérieure du bâtiment.

2. Dispositif selon la revendication 1, **caractérisé en ce que** la partie de recouvrement (2) est ancrée à la partie de support (1) à l'aide de vis.

3. Dispositif selon l'une des revendications 1 à 2, **caractérisé en ce qu'**un joint d'étanchéité (6) est disposé entre la partie de recouvrement (2) et la surface extérieure du bâtiment ou de l'objet.

4. Dispositif selon la revendication 3, **caractérisé en ce que** le joint d'étanchéité (6) est constitué d'un matériau à élasticité entropique.

5. Dispositif selon l'une des revendications 1 à 4, **caractérisé en ce que** les éléments de jonction sont trois boulons filetés (4) orientés de manière perpendiculaire à la surface extérieure du bâtiment et **en ce que** les lignes de connexion directe entre les différents axes de ces boulons filetés (4) représentent ensemble un triangle en projection sur un plan perpendiculaire aux boulons filetés (4) .

6. Dispositif selon la revendication 5, **caractérisé en ce que** le triangle est équilatéral.

7. Dispositif selon l'une des revendications 1 à 4, **caractérisé en ce que** les éléments de jonction sont au moins trois boulons filetés (4) qui sont orientés de manière perpendiculaire à la surface extérieure du bâtiment ou de l'objet.

8. Dispositif selon la revendication 2 et la revendication 5 ou la revendication 6 ou la revendication 7, **caractérisé en ce qu'**un écrou (5) est en prise avec un boulon fileté (4) et s'appuie contre la partie de recouvrement (2) sur le côté opposé à la partie de support (1).

9. Dispositif selon l'une des revendications 1 à 7, **caractérisé en ce que** les éléments de jonction traversant la surface de base de la partie de recouvrement (2) sont des boulons filetés (4) sur lesquels sont vissés des écrous (4) qui sont vissés sur les boulons filetés (4) sur le côté extérieur de la partie de recouvrement (2) et s'appuient contre la partie de recouvrement (2) et pressent la partie de recouvrement (2) contre une feuille d'étanchéité (10) du toit et donc également vers la partie de support (1).

10. Dispositif selon l'une des revendications 1 à 9, **caractérisé en ce qu'**une soupape (7) est disposée dans un alésage qui relie l'espace enfermé entre la partie de support (1) et la partie de recouvrement (2) à l'environnement.

11. Dispositif selon l'une des revendications 1 à 10, **caractérisé en ce qu'**une soupape, sous la forme d'une ouverture pouvant être fermée au choix, mène à travers un alésage dans la partie de recouvrement (2) dans l'espace entre la partie de recouvrement (2) et la partie de support (1) ou la surface du bâtiment.

12. Dispositif selon l'une des revendications 1 à 11, **caractérisé en ce que** le dispositif est disposé sur la face extérieure d'une feuille d'étanchéité (10) qui fait partie d'un toit et est relié de manière porteuse à la sous- construction de toit (20) située sous la feuille d'étanchéité (10).

13. Dispositif selon les revendications 9 et 12, **caractérisé en ce que** la partie de recouvrement (2) est pressée contre la feuille d'étanchéité (10) du toit et donc également vers la partie de support (1) par des écrous (5) qui sont vissés sur les boulons filetés (4) sur le côté extérieur de la partie de recouvrement (2) et s'appuient contre la partie de recouvrement (2).

14. Procédé de contrôle d'étanchéité d'un dispositif pour la fixation d'objets sur une surface extérieure d'un bâtiment ou d'un objet, selon l'une des revendications 1 à 13, le dispositif comprenant une partie de support (1) et une partie de recouvrement (2), la partie de support (1) ayant une fonction porteuse pour l'objet à fixer et la partie de recouvrement (2) ayant une fonction d'étanchéité par rapport à la surface extérieure du bâtiment ou de l'objet et étant disposée à cet effet sur le côté extérieur de la surface extérieure du bâtiment ou de l'objet et un ou plusieurs élément de jonction pour l'objet a fixer dépassant de la partie de support (1) à travers des ouvertures dans la partie de recouvrement (2), la partie de recouvrement (2) étant un corps indéformable et la position relative de la partie de recouvrement (2) par rapport à la partie de support (1) étant ajustable dans la direction perpendiculaire à la surface du bâtiment ou de l'objet,
**caractérisé en ce qu'**
une soupape, c'est-à-dire une ouverture pouvant être fermée au choix, mène à travers un alésage dans la partie de recouvrement (2) dans l'espace entre la partie de recouvrement (2) et la partie de support (1), une différence de pression par rapport à l'environnement étant générée dans cet espace après le montage du dispositif et l'étanchéité de l'espace entre la partie de recouvrement (2) et la partie de support (1) par rapport à l'environnement étant mesurée.
